# EUROPEAN PATENT APPLICATION

(11) **EP 0 933 252 A2**
(43) Date of publication of application: **04.08.1999**
(21) Application number: 98660148.2
(22) Date of filing: 21.12.1998
(51) Int. Cl.: B60P 7/08

(54) **Belt holder for cargo carriers**

(30) Priority: 29.01.1998 FI 980206
(71) Applicant: Oy G. Grönlund Ab, 64260 Kaskö (FI)
(72) Inventor: Äystö, Jussi, 64770 Äystö (FI)
(74) Representative: Roitto, Klaus

(57) **Abstract**

The invention relates to belt holders for cargo carriers, such as vans, the belt holder comprising a helical spring-like spring element (8), a mounting member (7) for mounting the spring element and locking means (11, 12, 13 ) for preventing the spring element from shifting in a direction equal to the longitudinal direction of the spring element. To facilitate manufacture, mounting and use of the belt holder, the belt holder is characterized in that the locking means comprise a tongue part (11) which is disposed in the mounting member (7), mountable about the spring element (8) and arranged to bend downwards in the spring element in a tapered portion (15) whose diameter (D1) is smaller than the diameter (D2) of the spring element in a first portion (16) on one side of and adjacent to the tapered portion, whereby the spring element comprises at least one shoulder (18), and the tapered portion together with the tongue part provide by said shoulder (18) the locking for preventing the spring element from shifting away from the mounting member in a direction equal to the longitudinal direction of the spring element. The invention also relates to a helical spring-like spring element for belt holders in cargo carriers.

## Description

### BACKGROUND OF THE INVENTION

The invention relates to a belt holder for cargo carriers, such as vans, the belt holder serving to keep the belt in place from a fastening means, such as a hook at floor level in the cargo carrier, to roof height in the cargo carrier to allow loading of the cargo carrier with goods without the belt being in the way during loading. The invention relates more specifically to a belt holder described in the preamble of the attached claim 1. The invention also relates to a helical spring-like spring element according to the preamble of the attached claim 7.

In this context, cargo carriers refer to different types of carriers for transporting goods. Cargo carriers can be open or covered. An example of a covered cargo carrier is a covered lorry, i.e. a van. An example of an open cargo carrier is a trailer of a lorry.

Cargo carriers should be loaded with goods, such as pallets, in such a way that the pellets and the goods are prevented from being displaced in the cargo space during transport. Displacement of goods may cause damage to the goods. The consequences are even more serious if the cargo carrier itself overturns because of a moving load. This could result in risk to human life in addition to damage to the goods.

Goods are fastened to the floor of the cargo carrier by belts or ropes to prevent them from being displaced. The belts are fastened to fastening means, e.g. hooks or loops, at one edge of the cargo carrier, and extend around the goods, their ends being fastened to corresponding fastening means at the opposite edge of the cargo carrier. Hooks for securing cargo are called securing hooks.

A problem in fastening goods is that the belts are relatively difficult to position in place around the goods. The reason is that the belts have to be kept out of the way during loading. The belts cannot lie on the floor during loading, because in that case they would remain under the goods and could not later be tied around the goods. Keeping the belts out of the way is a particularly marked problem in loading van-type cargo carriers which can be opened only along one of their long sides. When such a van is being loaded and the goods are placed against the closed, farthest side of the cargo space, no space remains to fasten the belts later to the securing hooks, which are likely to remain under the goods or in a narrow space between the goods and the farthest long side. When goods are loaded up to the roof or high up, the belt must also be pulled from the farthest long side to the open long side over the goods, which is cumbersome.

In the latter case it is known to have a person helping to keep the belt sufficiently high up during loading. This is naturally complicated. An alternative is to have at roof height a rigid inflexible support for keeping the belt up under loading. This solution aims at rational handling of belts, but it is difficult to release the belt from the support when the goods are to be fastened and this creates a problem. It has proven more or less difficult to throw the belt to release it.

It is known to use elastic belt holders mounted at roof height along one or both long sides of cargo carriers to solve the above problems. The aim is to keep the belt wedged during loading between the belt holder and a support surface, such as a longitudinal roof beam, and release the belt from the belt holder by jerking or pulling it, whereby the spring yields and the friction force stops acting. This known belt holder has proven advantageous because it facilitates handling the belts during loading and pulling the belts around the goods. A drawback in this known belt holder is that is comprises a pin around which the spring is fastened, making it complicated to manufacture. The pin is welded to a mounting member which in turn is to be fastened to the roof beam of the cargo carrier. Another drawback in this belt holder is that under certain circumstances the belt can remain wedged between the spring and the mounting member, so that the belt cannot be released from the belt holder by pulling it. A third drawback in this belt holder is that it has different structures depending on whether it is to be mounted from the right or the left. Furthermore, this known belt holder is suitable only for open trailers, and is accordingly arranged movable along the roof beam. The movable structure has been found to cause wear to the canvas of the cargo carrier.

Because of the above described drawbacks of known belt holders, the goods are sometimes insufficiently fastened or not fastened at all, in spite of regulations which specify that the goods have to be securely fastened while the cargo carrier is in motion. It is obvious that such situations are especially risky and should not exist at all.

### BRIEF DESCRIPTION OF THE INVENTION

It is an object of the invention to eliminate the above drawbacks and to provide a belt holder which has a simple structure and is so easy to use that the goods are always securely fastened irrespective of the structure of the cargo carrier (open, covered etc.). The belt holder of the invention is therefore characterized in that the locking means comprise a tongue part which is disposed in the mounting member and which is mountable about the spring element and arranged to be bent downwards in the spring element to a tapered portion whose diameter is smaller than the diameter of the spring element in a first portion on one side of and adjacent to the tapered portion, whereby the spring element comprises at least one shoulder, and the tapered portion together with the tongue part form a catch for preventing the spring element from being displaced relative to the mounting member in a direction equal to the longitudinal direction of the spring element.

The preferred embodiments of the belt holder are disclosed in the attached claims 2 to 6.

The spring element of the invention is characterized in that it comprises a tapered portion whose diameter is smaller than the diameter of the spring element in a first portion on a first side of and adjacent to the tapered portion so as to provide the spring element with at least one shoulder and such a catch for the spring element against the mounting member of the belt holder near said shoulder preventing the spring element from being displaced relative to the mounting member in a direction equal to the longitudinal direction of the spring element. The preferred embodiments of the spring element are disclosed in claims 8 and 9.

The most important advantages of the belt holder of the invention are its extremely easy manufacture, mounting and use. The use is so easy that the problems of loosely or poorly fastened cargo should be overcome. The belt holder or spring element is implemented identically for left-hand and right-hand use, bringing about savings in tool and storage costs.

### BRIEF DESCRIPTION OF THE FIGURES

In the following the invention will be described by means of an embodiment with reference to the attached drawing, in which
Figure 1 shows a vehicle container with belt holders and securing hooks for belts,
Figure 2 is an enlarged view of a belt holder in the farthest roof beam of the container,
Figure 3 shows the belt holder in the direction of arrow B of Figure 2,
Figures 4 and 5 show the mounting member of the belt holder, Figure 4 showing the mounting member in the direction of arrow C of Figure 5,
Figure 6 shows the spring element of the belt holder,
Figure 7 shows a blank for the mounting member, and
Figure 8 illustrates manufacture of the belt holder

### DETAILED DESCRIPTION OF THE INVENTION

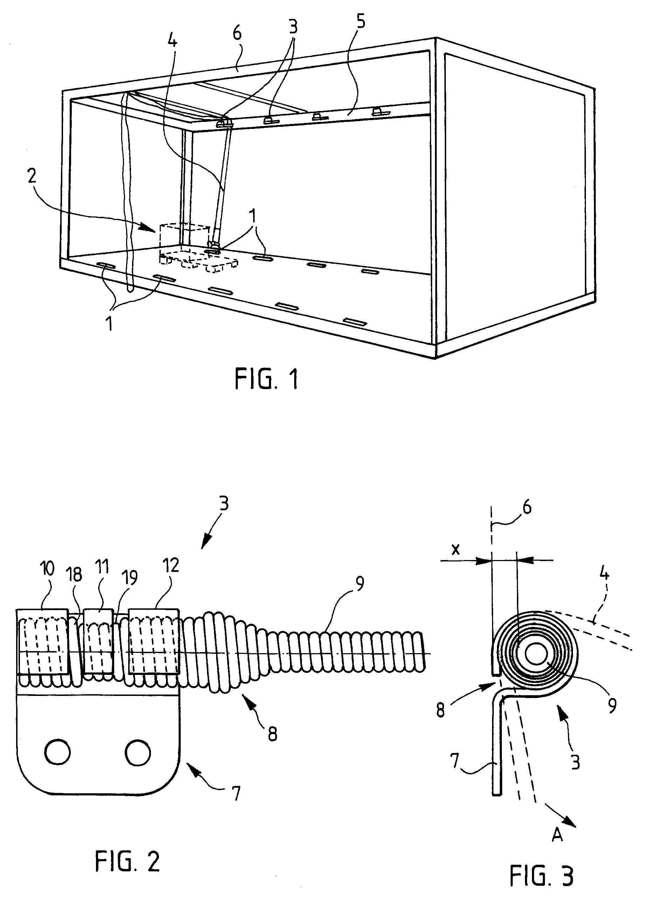

Figure 1 schematically shows a container of a van, with one of its long sides opened. The floor of the container is provided with hooks 1 for securing the cargo at an about one meter's distance along both long sides of the container. A pallet with goods is denoted by a dashed line and reference number 2. Reference number 3 denotes a belt holder for belts 4. Belt holders 3 are arranged along both opposite roof beams 5, 6 of the container, but the belt holders in the roof beam 6 are not visible in Figure 1.

In Figure 1, one end of the belt 4 is fastened to the hook 1, the belt 4 being upheld by the belt holders 3 in loading position during loading of the container. There are always two belt holders and two hooks for one belt 4. One belt holder and two hooks for each belt are sufficient if both sides of the container can be opened. The other end of the belt 4 is hanging freely in Figure 1, but is more typically thrown on top of the container roof during loading. After the container has been loaded the belt 4 is released from the belt holder 3 by jerking or pulling the belt. The free end of the belt is then fastened to the hook on the open side of the container, and then tightened. The tightening means for tightening the belts 4 are not shown, nor described in greater detail herein, as they can be of a conventional type known to a person skilled in the art.

Figures 2 and 3 show an embodiment of the belt holder allowing easy removal of the belt 4 from the belt holder 3.

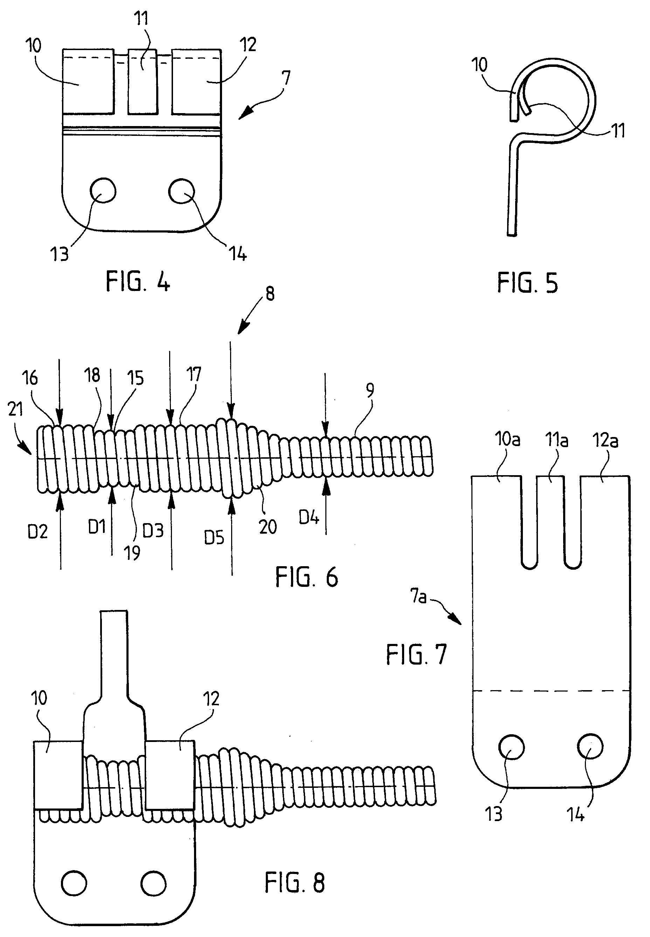

The belt holder consists of a mounting member 7 and a helical spring-like spring element 8. In Figures 4 and 5 the mounting member 7 is shown separate from the spring element, which is shown separately in Figure 6.

Figure 3 shows by a dashed line a belt 4 which is caught or wedged between the roof beam 6 and the free end 9 of the spring element for holding the belt in the position shown in Figure 1. The roof beam 6 serves as a mounting or support surface for the belt 4. The distance X between the free end 9 of the spring element and the roof beam 6 corresponds substantially to the thickness of the belt 4 in order for the belt to become well wedged. That is, the diameter D4 in Figure 6 is selected so that the distance to the mounting surface 6 corresponds to the thickness of the belt used. A too short distance X unfolds the free end of the spring element resulting in poor fastening of the belt 4, and a too long distance X naturally prevents the belt from being fastened at all.

The mounting member 7 is made by punching a blank 7a from a metal sheet, see Figure 7. The blank comprises three tongues 10a to 12a and two holes 13, 14. The tongues 10a and 12a are bent to provide tongue parts 10 and 12 having a shape shown in Figures 4 and 5. During mounting, the blank 7a is screwed or riveted by means of the holes 13, 14 to a roof beam 5 or 6, and the spring element is then led to the blank 7a, see Figure 8. Next the tongue part 11 of the mounting member is formed by bending the tongue 11a, e.g. with tongs, around the spring element 8 so that it hits a tapered portion 15 disposed in the spring element 8, cf. Figure 2. Figure 4 shows the result after the blank 7a has been bent into a mounting member 7, and Figure 2 shows the final result, i.e. the entire belt holder. The tongue part 11 presses the tapered portion 15 so that the latter yields somewhat, providing a firm fastening of the spring element 8 to the mounting member 7. The diameter D1 of the spring element 8 near the tapered portion 15 is smaller than diameter D2 in a first portion 16 at the rear end 21 of the spring element, see Figure 6. The diameter D1 of the tapered portion 15 is also smaller than the diameter D3 of the spring element 8 near a second portion 17 of the spring element.

Mounting takes a few seconds, during which the direction of the belt holder is adjusted to the direction of the securing hooks 1, this direction being fully arbitrary along the same side edge of the container.

The described structure provides the tapered portion 15 with two shoulders 18, 19, which can serve as catches for preventing the spring element 8 in the mounting member 7 from shifting to the right or left in Figure 2, the tongue part 11 stopping such a movement. The spring element must not move in its longitudinal direction as in that case it would not support the belt as desired and could be released from the mounting member in use.

The two sufficiently broad tongue parts 10 and 12 effectively prevent a lateral movement of the portions 16 and 17 in the spring element 8 from the mounting member when a heavy lateral force acts on the spring element.

Between its free end 9 and the tapered portion 15 the spring element 8 is provided with a conical portion 20 which widens in the direction from the free end towards the tapered portion. The angle of the conical portion is about 5 to 30°, preferably about 20°. Owing to the conical portion 20, it is easy to wedge the belt 4 between the support surface 6 and the spring element 8, see Figure 3. When the belt 4 is pulled in the direction of arrow A, the spring element yields in the pulling direction by means of the conical portion 20 in such a way that the compressive force holding the belt 4 in place gives in and the belt falls off the belt holder 3. The diameter D4 of the free end 9 is smaller than diameters D2 and D3, whereby the free end 9 is relatively rigid and will not yield appreciably when the belt 4 is pulled. The spring forces of the conical portion 20 and the free end 9 naturally have to be sufficiently strong to hold the belt 4 at roof height without letting it slide away under the influence of its own weight when no pulling force acts on the belt, corresponding to the loading situation illustrated in Figure 1.

Because the thickest diameter D5 of the conical portion 20 is larger than diameter D3, the belt 4 is prevented from being caught or wedged undesirably close to the mounding piece 7. The spring element has to comprise a sufficient number of spring turns which bend when the belt 4 is released; if only one or some spring turns bend, the stress on the spring element becomes excessive, rendering it plastically deformed, whereupon it can no longer operate in the desired manner.

The mounting part and the spring element are identical and are therefore mountable in a left-hand or right-hand embodiment.

Mounted on an open cargo carrier, the belt holder shown in Figure 2 causes no wear to a canvas. Being fixedly mounted, as opposed to a loose and movable mounting, the belt holder will not be mislaid.

The invention has been described above only by means of a preferred embodiment and it should be pointed out that the details of the invention may vary in many ways within the scope of the attached claims. Consequently, the tapered portion 15, for example, can extend all the way to the conical portion 20 so that there is no portion 17 having a larger diameter D3 than the tapered portion 15. In such a case, a shoulder (corresponding to the shoulder 19) would be formed in the passage between the tapered portion and the conical portion 20 for preventing the spring element from shifting to the left. It is also feasible that there is no shoulder for preventing the spring element from shifting to the left (in Figure 2), in which case a catch (not shown) can be provided instead, e.g. in the mounting plate, the rear end 21 of the spring element bearing against said catch. It is further feasible that diameter D1 in Figure 6 is larger than diameters D2 and D2. In this case the tongues 10a and 12a would be bent to provide the locking instead of the tongue 11a. Instead of one tapered portion, the belt holder may have two or more tapered portions. However, such a structure would be somewhat more complicated than a mounting member comprising only one tapered portion. It is feasible to provide the mounting member with a wedge surface corresponding to the described wedge form in the spring element, whereby the spring element requires no conical portion 20 at all. In such a case the wedge surface of the mounting member (instead of the roof beam 5) would provide a catch for preventing the belt 4 from moving too far against the tapered portion 15. It is obvious that, in principle, the described belt holder constitutes a holder for any longitudinal flexible means suitable for fastening goods, a belt being only an example of such means.

## Claims

1. A belt holder for cargo carriers, such as vans, the belt holder comprising a helical spring-like spring element (8) and a mounting member (7) for mounting the spring element, the spring element and mounting member serving to keep a longitudinal flexible element, such as a belt (4), in place at a loading position from a fastening element at floor level in the cargo carrier to roof height in the cargo carrier to allow loading of the cargo carrier with goods without the belt being in the way, the spring element comprising a first end (21) and a second, laterally bendable free end (9) arranged by its spring force to keep the belt fixedly clamped against a support surface to keep the belt in said loading position, the free end being arranged to yield and accordingly free the belt from said loading position to free the belt from the belt holder when a pull is applied to the belt, the belt holder further comprising locking means (11, 18, 19) for preventing the spring element from shifting in a direction equal to the longitudinal direction of the spring element, **characterized** in that the locking means comprise a tongue part (11) which is disposed in the mounting member (7) and which is mountable about the spring element (8) and arranged to be bent downwards in the spring element to a tapered portion (15) whose diameter (D1) is smaller than the diameter (D2) of the spring element in a first portion (16) on one side of and adjacent to the tapered portion, whereby the spring element comprises at least one shoulder (18), and the tapered portion together with the tongue part form a catch for preventing the spring element from being displaced relative to the mounting member in a direction equal to the longitudinal direction of the spring element.

2. A belt holder as claimed in claim 1, **characterized** in that the mounting member (7) further comprises a tongue part (10), arranged to be disposed about and against said first portion (16) in the spring element (8).

3. A belt holder as claimed in claim 2, **characterized** in that the spring element (8) comprises on the other side of and adjacent to the tapered portion (15) a second portion (17) whose diameter (D3) is larger than the diameter (D1) of the spring element in the tapered portion, the mounting member (7) comprising a third tongue part (12), arranged to be disposed about and against said second portion of the spring element.

4. A belt holder as claimed in claim 1, **characterized** in that the spring element (8) comprises a free end (9) whose diameter (D4) is smaller than the diameter (D2) of the spring element in said first portion (16) on one side of the tapered portion (15).

5. A belt holder as claimed in claim 1, **characterized** in that the spring element (8) comprises between its free end (9) and the tapered portion (15) a conical portion (20) which widens in the direction from the free end towards the tapered portion.

6. A belt holder as claimed in any one of the preceding claims, **characterized** in that the diameter (D5) of the thickest part of the conical portion (20) is larger than the diameter (D1) of the spring element in the tapered portion (15) and the diameter (D2) in the first portion (16) of the spring element.

7. A helical spring-like spring element (8) for a belt holder in cargo carriers, such as vans, the belt holder being intended to allow loading the cargo carrier with goods without the belt being in the way, the spring element comprising a first end (21) and a second, laterally bendable free end (9) arranged by its spring force to keep the belt fixedly clamped against a support surface to keep the belt in said loading position, the free end being arranged to yield and accordingly free the belt from said loading position to free the belt from the support surface when a pull is applied to the belt, **characterized** in that the spring element comprises a tapered portion (15) whose diameter (D1) is smaller than the diameter (D2) of the spring element in a first portion (16) on a first side of and adjacent to the tapered portion so as to provide the spring element with at least one shoulder (18) and such a catch for the spring element against the mounting member of the belt holder near said shoulder preventing the spring element from being displaced relative to the mounting member in a direction equal to the longitudinal direction of the spring element.

8. A spring element as claimed in claim 7, **characterized** in that the spring element (8) comprises between its free end (9) and the tapered portion (15) a conical portion (20) which widens in a direction from the free end towards the tapered portion.

9. A spring element as claimed in claim 8, **characterized** in that the diameter (D5) in the thickest part of the conical portion (20) is larger than the diameter (D1) of the spring element in the tapered portion (15) and the diameter (D2) of the spring element in said first portion.
